# EUROPEAN PATENT APPLICATION

(11) **EP 4 733 744 A1**
(43) Date of publication of application: **29.04.2026**
(21) Application number: 23942711.5
(22) Date of filing: 26.06.2023
(51) Int. Cl.: G01N 21/3504, G01N 21/01

(54) **HIGH-PRECISION DOUBLE-RANGE INFRARED GAS SENSOR AND HIGH-PRECISION DOUBLE-RANGE INFRARED GAS ANALYSIS METHOD**

(71) Applicant: Cubic Sensor and Instrument Co., Ltd, Wuhan, Hubei 430205 (CN)
(72) Inventor: XIONG, Youhui, Wuhan, Hubei 430205 (CN); LI, Mingliang, Wuhan, Hubei 430205 (CN); HE, Tao, Wuhan, Hubei 430205 (CN); LI, Shaoyong, Wuhan, Hubei 430205 (CN); RUAN, Fei, Wuhan, Hubei 430205 (CN); CHENG, Chang, Wuhan, Hubei 430205 (CN)
(74) Representative: JD&P Patent Attorneys Joanna Dargiewicz & Partners
(86) International application number: PCT/CN2023/102379
(87) International publication number: WO 2025/000182

(57) **Abstract**

The invention discloses a high-precision double-range infrared gas sensor and a high-precision double-range infrared gas analysis method. The sensor includes a chamber (10). An outer frame of the chamber (10) is configured as an enclosed structure. A reflective portion, configured as an enclosed structure, is arranged on an inner wall of the chamber (10). A first light source, a second light source and an infrared detector are arranged in an interior space of the chamber. During measurement, light emitted by the first light source and light emitted by the second light source are controlled in a time-sharing manner, to be reflected in the chamber to form a long measurement light path and a short measurement light path, thereby implementing detection of a to-be-measured gas with a low-range concentration and a to-be-measured gas with a high-range concentration. The invention solves the technical problem that simultaneous measurement of a low-range concentration and a high-range concentration is unavailable in the prior art, may be used for both air quality monitoring of HVAC and CO2 safety and leakage monitoring of heat pumps, and has a low cost and high reliability.

## Description

### FIELD

The invention relates to the field of infrared gas sensors, in particular to a high-precision double-range infrared gas sensor and a high-precision double-range infrared gas analysis method.

### BACKGROUND

In recent years, people pay more and more attention to the air quality indoors or in public places, for example, carbon dioxide (CO₂) is one of the important indicators for indoor air quality monitoring. In the field of HVAC (Heating, Ventilating and Air Conditioning), CO₂ sensors are used to monitor the CO₂ content in a room or a car, and when the CO₂ content exceeds a set limit, a ventilating system in HVAC introduces fresh air, which effectively improves energy efficiency and is of great significance for energy conservation and environmental protection.

In addition, CO₂, as an important component of the new refrigerant R744, will not destroy the ozone layer in the atmosphere, and with a zero ODP and a low GWP, it will be an ideal refrigerant for air conditioning in the future. It is stated, in Literature "Application Research of Carbon Dioxide Refrigerant", that in the early 1990s, Norway's NTH-SINTEF developed a prototype of an automotive air conditioner using a CO₂ critical refrigeration cycle; since 1994, BMW, DALMLERENZ, VOLVO, Volkswagen and other famous European companies have launched a cooperative project called "RACE", and developed a CO₂ automotive air conditioning system together with famous European universities and automotive air conditioning manufacturers, and it has been used as a long-term substitute of automotive air conditioning refrigerant in many countries; and in practical application, the leakage of CO₂ as an air conditioning refrigerant will directly affect the refrigeration efficiency, and it is necessary to monitor the leakage of the refrigerant by means of a CO₂ sensor. Therefore, the use of CO₂ sensors for leakage detection of the R744 refrigerant has a great market prospect.

In practical application, once R744 leaks, the refrigeration efficiency will be affected directly, and personnel suffocation may be caused. So, it is necessary to monitor the leakage of the refrigerant by means of the CO₂ sensor and give an alarm in time.

Generally, in different application scenarios of sensors, the requirements for the gas measurement range will be different. For accurate monitoring of the CO₂ content in a room or a car, a low-range sensor is often used; while for monitoring of the leakage of the refrigerant (R744) of heat pump air conditioners, a high-range sensor is needed because once the refrigerant leaks, the CO₂ concentration will be extremely high, leading to a safety risk. To adapt to these two scenarios, two sensors with different ranges are generally configured at different positions for concentration monitoring, which results in a high cost and is not beneficial to batch application. Moreover, since the two sensors are always in the working state, the fault probability is high. Therefore, a high-precision, dual-range, low-cost CO₂ sensor is urgent needed.

Non-dispersive infrared spectroscopy (NDIR), as an important gas analysis method, is often used for quantitative analysis of gases. The principle of analysing a measured gas by NDIR is as follows: the measured gas is irradiated with infrared light and is able to absorb light at a specific wavelength; according to the Lambert-Beer law, in an ideal condition, the effective absorption light path of the light and the absorption coefficient of molecules at a specific wavelength are known, the concentration of the measured gas may be calculated according to the ratio of a light signal before the light is absorbed by the measured gas to a light signal after the light is absorbed by the measured gas. Gas sensors based on the NDIR principle have the advantages of quick response, high sensitivity, good stability and long service life. Therefore, infrared gas sensors are developed rapidly in recent years.

Patent Publication No. WO02077619A2 discloses an infrared gas sensor, which implements gas concentration defection by means of a single light source, a single detector and a single chamber. Although such a gas sensor is simple in structure and low in cost, it has the defects of low detection precision and range and cannot realize high-precision measurement of wide-range CO₂ concentrations.

Patent Publication No. CN2554623Y discloses a gas concentration detector, which adopts one or two light sources, two detectors and two independent chambers. In actual use, nitrogen of a specific concentration is sealed in a reference chamber, a measured gas is introduced into a measurement chamber, the measurement chamber and the reference chamber are irradiated with an infrared light source, and the concentration of the measured gas is obtained according to the ratio of electric signals output by the two detectors. This scheme solves the problem of drifts of the gas sensor caused by temperature and aging of the light sources and the air chambers, but it has the defects of low detection precision and range, cannot realize high-precision measurement of wide-range CO₂ concentrations, and the use of two detectors leads to a high cost and is not beneficial to structural miniaturization and low cost of the gas sensor.

Patent Publication No. DE19925196C2 discloses an NDIR gas sensor, which adopts two light sources and a single director, where the two light sources are positioned symmetrically based on a measurement chamber, the lengths of paths from the two light sources to the detector are the same, a first light source is used for detection and works all the time, a second light source is used for reference, the second light source starts to work after the first light source works for a preset time, the two light sources adopt different pulses and work intermittently, and the second light source is merely used as a standby light source. This scheme cannot realize high-precision detection of CO₂ concentrations within different ranges, thus not adapting to complex application scenarios.

Patent Publication No. CN104122223B discloses a double-path and multi-gas infrared gas sensor, where a lower half of infrared light emitted by an infrared light source is reflected by a planar reflector and then reaches a lower half of a double-channel detector to form a short light path; an upper half of the infrared light emitted by the infrared light source is reflected repeatedly by an inner surface of an annular chamber and then reaches an upper half of the double-channel detector to form a long light path, such at both the long light path and the short light path are formed in one chamber. The requirements for simultaneous detection of gases different in infrared absorptivity are satisfied, and requirements for different detection accuracies of the same gas are also satisfied. However, by adopting this scheme, the light source needs to work for a long time, so the service life of the light source is greatly compromised; and the use of the double-channel infrared detector leads to a high cost.

Patent Publication No. CN114136911A discloses a wide-range and high-sensitivity gas sensor and an implementation method thereof. A beam emitted by a light source assembly is split by a beam splitter and then enters different detectors to form light paths with different lengths, each detector receives a light signal of the corresponding light path, and gas concentration measurement results corresponding to the light paths with different lengths are calculated respectively. High-sensitivity detection of the gas concentration is implemented by means of the detector corresponding to the long light path, and wide-range detection of the gas concentration is realized by means of the detector corresponding the short light path, and both a high CO₂ concentration and a low CO₂ concentration may be detected. This scheme has the defects that the service life of one light source is not as long as the service life of two light sources, and the use of two detectors leads to a high cost.

To sum up, existing NDIR gas sensors have defects in detection precision and detection range, and cannot guarantee a low cost and a long service life while guaranteeing high-precision CO₂ concentration measurement, and two sensors are needed to respectively measure a high-range concentration and a low-range concentration respectively. Therefore, an infrared gas sensor, which has a low cost and a long service life and guarantees high precision for both the high-range concentration and the low-range concentration, needs to be developed urgently.

### SUMMARY

To overcome the defects of existing NDIR gas sensors in detection precision, detection range and manufacturing cost, the present invention provides a double-range NDIR gas sensor adopting two light sources and a single detector, and a corresponding gas analysis method.

Specifically, the present invention provides a high-precision double-range infrared gas sensor comprising a chamber.

An outer frame of the chamber is configured as an enclosed structure, and a reflective portion, configured as an enclosed structure, is arranged on an inner wall of the chamber.

A first light source, a second light source and an infrared detector are arranged in an interior space of the chamber.

Light emitted by the first light source is reflected by the reflective portion and then captured by the infrared detector to form a long path gas chamber L1 for detecting a first concentration gas.

Light emitted by the second light source is reflected by the reflective portion and then captured by the infrared detector to form a short path gas chamber L2 for detecting a second concentration gas.

The first light source and the second light source are controlled by a control module which comprises a light source drive unit, a control unit and an operational amplification unit.

A detection signal of the infrared detector is amplified by the operational amplification unit and then transmitted to the control unit.

The control unit generates a control signal by time-sharing control, and the control signal is transmitted to the first light source and the second light source by means of the light source drive unit.

A concentration of the first concentration gas is less than that of the second concentration gas.

A high-precision double-range infrared gas analysis method is applied to the high-precision double-range infrared gas sensor. The method comprises:
S1, sending, by the control unit, an initial control signal to control the first light source (7) and the second light source (8) to flicker alternately;
S2, sampling, by an operational amplification unit, a signal value C1 of the long path gas chamber L1 and a signal value C2 of the short path gas chamber L2 from the infrared detector (9);
S3, calculating a gas concentration D1 according to a linear fitting formula D1=f(C1) of calibration data of the long path gas chamber L1, and calculating a gas concentration D2 according to a linear fitting formula D2=f(C2) of calibration data of the short path gas chamber L2; and
S4, determining whether a current concentration is within a low range, a high range or an intermediate range; if the current concentration is within the low range, outputting the gas concentration D1; if the current concentration is within the high range, outputting the gas concentration D2; otherwise, outputting a calculated composite value k*D1+(1-k)*D2.

The invention fulfils the following beneficial effects:
1. The invention solves the technical problem that simultaneous and high-precision measurement of a low-range concentration and a high-range concentration is unavailable in the prior art.
2. Low cost: by adding a low-cost light source, the technical problem that the use of two infrared gas sensors leads to a high cost and is not beneficial for large-scale application is solved.
3. Long service life and high reliability: because the infrared gas sensor adopts two light sources which work alternately, the operating time of each light source is effectively shortened, and compared with sensors adopting a single light source and a single detector, the service life is prolonged, and the reliability is high.

### BRIEF DESCRIPTION OF THE DRAWINGS

FIG. 1 illustrates a schematic structural diagram of a high-precision double-range infrared gas sensor according to the invention.
FIG. 2 illustrates a schematic control diagram of a first light source 7 and a second light source 8.
FIG. 3 illustrates stereograms of an internal structure of a chamber 10 from two different perspectives.
FIG. 4 illustrates schematic diagrams of two light paths of a long path gas chamber.
FIG. 5 illustrates a schematic diagram of a light path of a short path gas chamber.
FIG. 6 illustrates a schematic diagram of a control signal.
FIG. 7 illustrates a schematic diagram of test data obtained in a case where light emitted by a first light source 7 and emitted by a second light source 8 pass through the long path gas chamber L1 and the short path gas chamber L2 under different concentrations.
FIG. 8 illustrates a fitting curve of calibration data of the long path gas chamber L1 under a low concentration.
FIG. 9 illustrates a fitting curve of the calibration data of the long path gas chamber L1 under a high concentration.
FIG. 10 illustrates a fitting curve of calibration data of the short path gas chamber L2 under a low concentration.
FIG. 11 illustrates a fitting curve of calibration data of the short path gas chamber L2 under a high concentration.
FIG. 12 illustrates a fitting curve of calibration data of the long path gas chamber L1 under a low concentration according to one embodiment.
FIG. 13 illustrates a fitting curve of calibration data of the short path gas chamber L2 under a high concentration according to one embodiment.

### DESCRIPTION OF THE EMBODIMENTS

To better clarify the purposes, technical solutions and advantages of the invention, the embodiments of the invention are further described below in conjunction with accompanying drawings.

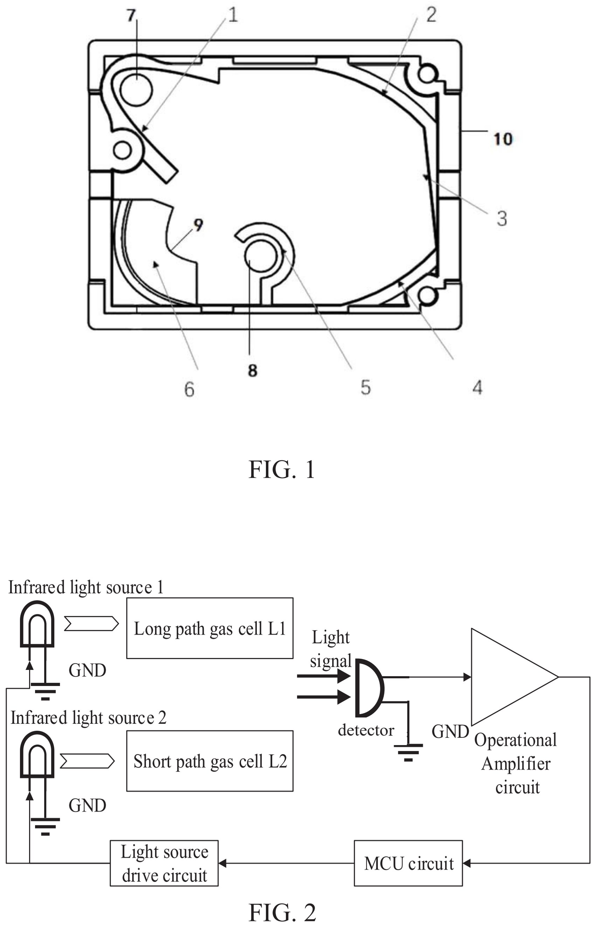

Refer to FIG. 1 which illustrates a schematic structural diagram of an infrared gas sensor according to the invention.

The invention provides a high-precision double-range infrared gas sensor, including: a chamber 10.

An outer frame of the chamber 10 is configured as an enclosed structure. Correspondingly, a reflective portion, configured as an enclosed structure, is arranged on an inner wall of the chamber 10. It should be noted that the enclosed structure is rectangular in this embodiment, and in other embodiments, the enclosed structure may be in other shapes such as square or polygonal.

A first light source 7, a second light source 8 and an infrared detector 9 are arranged in an interior space of the chamber 10.

Light emitted by the first light source 7 is reflected by the reflective portion and then captured by the infrared detector 9 to form a long path gas chamber L1 for detecting a first concentration gas.

Light emitted by the second light source 8 is reflected by the reflective portion and then captured by the infrared detector 9 to form a short path gas chamber L2 for detecting a second concentration gas.

The first light source 7 and the second light source 8 are controlled by a control module, and the control module includes a light source drive unit, a control unit and an operational amplification unit.

Refer to FIG. 2 which illustrates a schematic control diagram of the first light source 7 and the second light source 8.

The first light source 7 and the second light source 8 are controlled by the control module, and the control includes the light source drive unit, the control unit and the operational amplification unit.

A detection signal of the infrared detector 9 is amplified by the operational amplification unit and then transmitted to the control unit.

The control unit generates a control signal by time-sharing control, and the control signal is transmitted to the first light source 7 and the second light source 8 by means of the light source drive unit.

The concentration of the first concentration gas is less than that of the second concentration gas.

As an embodiment, the light source drive unit adopts a TPS79301 chip, the control unit adopts a STM32F031F6 chip, and an operational amplification unit adopts an OPA2365 module or chip.

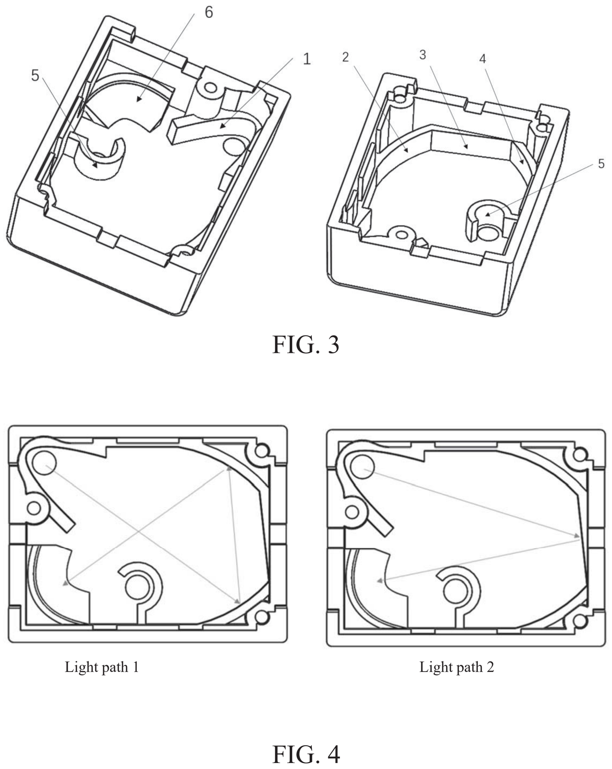

Refer to FIG. 3 which illustrates an internal structure of the chamber 10 from two different perspectives.

The reflective portion arranged in the chamber 10 includes a first reflective surface 1, a second reflective surface 2, a third reflective surface 3, a fourth reflective surface 4, a fifth reflective surface 5 and a sixth reflective surface 6.

In this embodiment, the outer frame of the chamber 10 is rectangular, and the first reflective surface 1 is arranged at an upper left corner of the chamber 10 and partially wraps around the first light source 7; the second reflective surface 2 is arranged at an upper right corner of the chamber 10; the third reflective surface 3 is arranged in the middle of a right side of the chamber 10; the fourth reflective surface 4 is arranged at a lower right corner of the chamber 10; the fifth reflective surface 5 is arranged at a bottom end of the chamber 10 and partially wraps around the second light source 8; the sixth reflective surface 6 is arranged at a lower left corner of the chamber 10, and the infrared detector 9 is arranged opposite to the sixth reflective surface 6.

It should be noted that the position of the first light source 7, the position of the second light source 8 and the position of the infrared detector 9 are fixed by pre-formed holes defined in the cover plate. In use, the cover plate is covered on the chamber 10.

The first reflective surface 1 is configured to converge the light emitted by the first light source 7 and reflect the converged light to the third reflective surface 3 or the fourth reflective surface 4. The first reflective surface 1 is a parabolic reflective surface or an elliptical reflective surface.

Preferably, the first light source 7 is an incandescent lamp or a point light source.

The second reflective surface 2, the third reflective surface 3 and the fourth reflective surface 4 are arc-shaped reflective surfaces or planar reflective surfaces.

The fifth reflective surface 5 is configured to converge the light emitted by the second light source 8 and reflect the converged light to the sixth reflective surface 6.

Preferably, the second light source 8 and the first light source 7 are identical and are both incandescent lamps or point light sources.

It should be noted that the second reflective surface 2, the third reflective surface 3 and the fourth reflective surface 4 are arc-shaped reflective surfaces or planar reflective surfaces.

The sixth reflective surface 6 is configured to reflect reflected light parallel to the bottom surface of the chamber 10 into the infrared detector 9, and an angle between the sixth reflective surface 6 and the bottom surface of the chamber 10 is 45°.

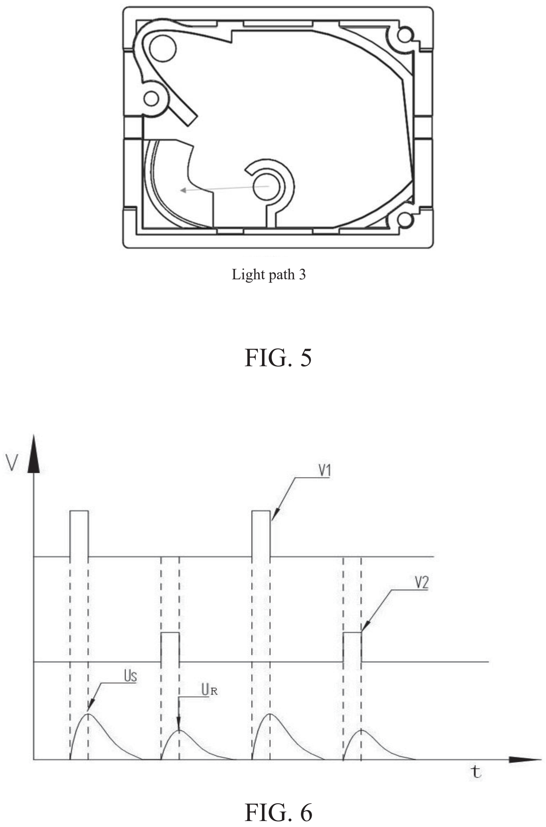

Refer to FIGS. 4 and 5, where FIG. 4 illustrates schematic diagrams of two light paths of the long path gas chamber, and FIG. 5 illustrates a schematic diagram of a light path of the short path gas chamber.

The long path gas chamber L1 includes two light paths which are respectively a first light path and a second light path, and the short path gas chamber L2 adopts a third light path; wherein:
the first light path: the light emitted by the first light source 7 enters the infrared detector 9 after being reflected by the first reflective surface 1, the fourth reflective surface 4, the second reflective surface 2 and the sixth reflective surface 6;
the second light path: the light emitted by the first light source 7 enters the infrared detector 9 after being reflected by the first reflective surface 1, the third reflective surface 3 and the sixth reflective surface 6;
the third light path: the light emitted by the second light source 8 enters the infrared detector 9 after being reflected by the fifth reflective surface 5 and the sixth reflective surface 6.

A high-precision double-range infrared gas analysis method applied to the high-precision double-range infrared gas sensor is provided. The method specifically includes:
S1, the control unit sends an initial control signal to control the first light source 7 and the second light source 8 to flicker alternately.

Refer to FIG. 6 which illustrates a schematic diagram of the control signal.

The light sources are driven to be turned on alternately, V₁ is a short-path light source drive signal, V₂ is long-path light source drive signal, U_{S} is the waveform of the short-path light source drive signal, and U_{R} is the waveform of the long-path light source drive signal.

S2, an operational amplification unit samples a signal value C1 of the long path gas chamber L1 and a signal value C2 of the short path gas chamber L2 from the infrared detector 9.

S3, a gas concentration D1 is calculated according to a linear fitting formula D1=f(C1) of calibration data of the long path gas chamber L1, and a gas concentration D2 is calculated according to a linear fitting formula D2=f(C2) of calibration data of the short path gas chamber L2.

It should be noted that f() indicates a transformation relation between D1 and C1 and is obtained by pre-calibration.

S4, whether a current concentration is within a low range, a high range or an intermediate range is determined; if the current concentration is within the low range, the gas concentration D1 is output; if the current concentration is within the high range, the gas concentration D2 is output; otherwise, a calculated composite value k*D1+(1-k)*D2 is output.

It should be noted that low range, the high range and the intermediate range are preset. Specifically, when the current concentration is within 0-Da, the current concentration is within the low range; when the current concentration is within Da-Db, the current concentration is within the intermediate range; or, when the current concentration is greater than Db, the current concentration is within the high range. Wherein, k ranges from 0 to 1.

It should be noted that the current concentration is calculated first by the fitting formula for the long path gas chamber, that is, the current concentration is temporarily set to D1.

If D1 is within 0-Da, D1 is output; if D1 is greater than Db, D2 is output; or, if D1 is within Da-Db, k*D1+(1-k)*D2 is output.

As one embodiment, refer to Table 1, which shows test data of a signal of the long path gas chamber and signal of the short path gas chamber under different concentrations.

Table 1 Test data of a signal of the long path gas chamber and signal of the short path gas chamber under different concentrations

| Measurement points | CO₂ concentration (ppm) | Signal of long path gas chamber L1 | Signal of short path gas chamber L2 | Change rate of long path gas chamber L1 | Change rate of short path gas chamber L2 |
|---|---|---|---|---|---|
| 1 | 0 | 3092 | 2131 | 0.0% | 0.0% |
| 2 | 400 | 3020 | 2126 | 2.3% | 0.2% |
| 3 | 700 | 2961 | 2121 | 4.2% | 0.5% |
| 4 | 1200 | 2866 | 2109 | 7.3% | 1.0% |
| 5 | 1700 | 2775 | 2095 | 10.3% | 1.7% |
| 6 | 2200 | 2683 | 2078 | 13.2% | 2.5% |
| 7 | 3800 | 2449 | 2011 | 20.8% | 5.6% |
| 8 | 5300 | 2358 | 1939 | 23.7% | 9.0% |
| 9 | 7500 | 2323 | 1885 | 24.9% | 11.5% |
| 10 | 10000 | 2304 | 1845 | 25.5% | 13.4% |
| 11 | 25000 | 2258 | 1729 | 27.0% | 18.9% |
| 12 | 50000 | 2226 | 1624 | 28.0% | 23.8% |

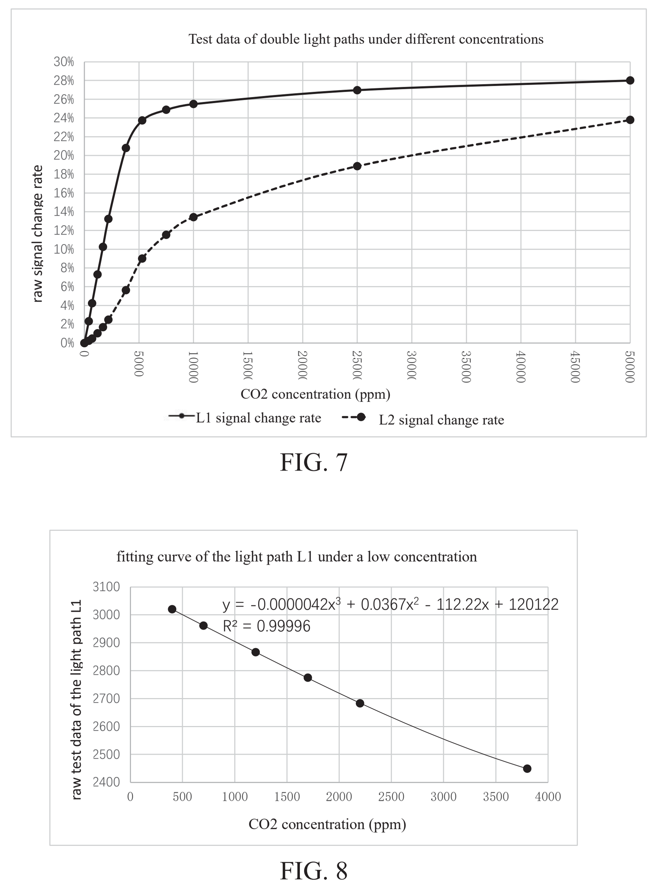

Refer to data in Table 1 and FIG. 7 which illustrates a schematic diagram of test data obtained in a case where light emitted by a first light source 7 and emitted by a second light source 8 pass through the long path gas chamber L1 and the short path gas chamber L2 under different concentrations.

It may be known, from FIG. 7, that the signal of the long path gas chamber L1 gradually becomes saturated under a concentration over 5300 ppm and has a large change rate under a concentration below 5300 ppm, and the signal of the short path gas chamber L2 has a small change rate under the concentration below 5300 ppm and has a large change rate under a concentration over 5300 ppm.

So, within a range of 0-4000 ppm, the concentration D1 is measured by means of the long path gas chamber L1; within a range of 4000 ppm-5300 ppm, the measured composite concentration (k*D1+(1-k)*D2) of the long path gas chamber L1 and the short path gas chamber L2 is used as a final output concentration; and within a range over 5300 ppm, the concentration D2 is measured by means of the short path gas chamber and used as an output concentration.

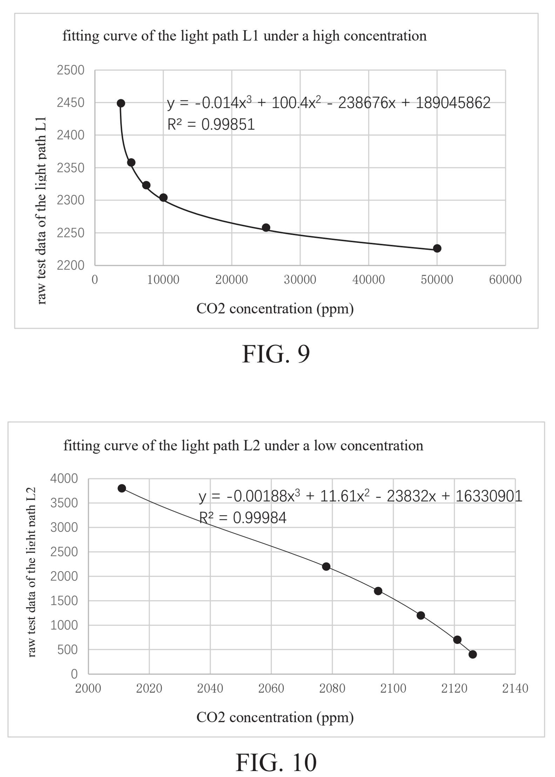

Refer to FIGS. 8 and 9, where FIG. 8 illustrates a fitting curve of calibration data of the long path gas chamber L1 under a low concentration, and FIG. 9 illustrates a fitting curve of calibration data of the long path gas chamber L1 under a high concentration.

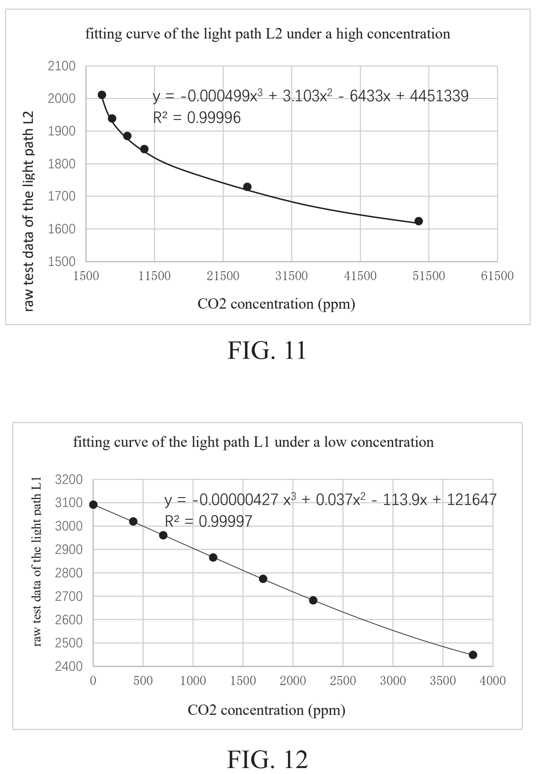

Refer to FIGS. 10 and 11, where FIG. 10 illustrates a fitting curve of calibration data of the short path gas chamber L2 under a low concentration, and FIG. 11 illustrates a fitting curve of calibration data of the short path gas chamber L2 under a high concentration.

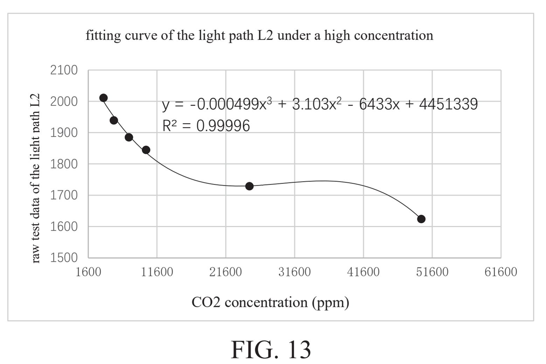

Refer to FIGS. 12 and 13, where FIG. 12 is illustrates a fitting curve of calibration data of the long path gas chamber L1 under a low concentration according to one embodiment, and FIG. 13 illustrates a fitting curve of calibration data of the short path gas chamber L2 under a high concentration according to one embodiment. It should be noted the long path gas chamber L1 is used in case of a low range, and the short path gas chamber L2 is used in case of a high range.

Refer to Table 2 which illustrates concentrations and error calculation results obtained by piecewise fitting with the long path gas chamber L1, piecewise fitting with the short path gas chamber L2, and fitting with the long path gas chamber L1 and the short path gas chamber L2 (errors are calculated according to a fluctuation of ±4 of test data of original signals).

Table 2 Concentration and error calculation results by piecewise fitting with the long path gas chamber L1, piecewise fitting with the short path gas chamber L2, and piecewise fitting with the long path gas chamber L1 and the short path gas chamber L2

| CO₂ concent ration (ppm) | Calculation results obtained by fitting with L1 and L2 | | | | Calculation result obtained by fitting with L1 | | | | Calculation result obtained by fitting with L2 | | | |
|---|---|---|---|---|---|---|---|---|---|---|---|---|
| | Fitted concentration (ppm) | | Error | | Fitted concentration (ppm) | | Error | | Fitted concentration (ppm) | | Error | |
| | max | min | max | min | max | min | max | min | max | min | max | min |
| 0 | 23 | -22 | 23 | -22 | 23 | -22 | 23 | -22 | 379 | -79 | 379 | -79 |
| 400 | 416 | 373 | 16 | -27 | 416 | 373 | 16 | -27 | 637 | 214 | 237 | -186 |
| 700 | 728 | 686 | 28 | -14 | 728 | 686 | 28 | -14 | 875 | 485 | 175 | -215 |
| 1200 | 1224 | 1182 | 2.0% | -1.5% | 1224 | 1182 | 2.0% | -1.5% | 1374 | 1052 | 14.5% | -12.3% |
| 1700 | 1710 | 1666 | 0.6% | -2.0% | 1710 | 1666 | 0.6% | -2.0% | 1847 | 1589 | 8.6% | -6.5% |
| 2200 | 2231 | 2184 | 1.4% | -0.7% | 2231 | 2184 | 1.4% | -0.7% | 2307 | 2103 | 4.9% | -4.4% |
| 3800 | 3775 | 3722 | -0.6% | -2.0% | 3155 | 4586 | -17.0 % | 20.7% | 3979 | 3548 | 4.7% | -6.6% |
| 5300 | 5299 | 5057 | 0.0% | -4.6% | 5951 | 6108 | 12.3% | 15.2% | 5312 | 5071 | 0.2% | -4.3% |
| 7500 | 7692 | 7244 | 2.6% | -3.4% | 7285 | 6584 | -2.9% | 12.2% | 7704 | 7256 | 2.7% | -3.3% |
| 10000 | 10513 | 9866 | 5.1% | -1.3% | 10284 | 8769 | 2.8% | 12.30% | 10524 | 9878 | 5.2% | -1.2% |
| 25000 | 25636 | 24197 | 2.5% | -3.2% | 28383 | 23890 | 13.5% | -4.4% | 25645 | 24207 | 2.6% | -3.2% |
| 50000 | 51250 | 48817 | 2.5% | -2.4% | 53433 | 46023 | 6.9% | -8.0% | 51258 | 48825 | 2.5% | -2.3% |

By adopting the long path gas chamber L1, the measurement precision reaches 5%reading within the range of 0-4000 ppm and reaches 25%reading within the range of 4000 ppm-40000 ppm. By adopting the short path gas chamber L2, the measurement precision reaches 15%reading+400 ppm within the range of 0-4000 ppm and reaches 7%reading within the range 4000 ppm-40000 ppm. By adopting both the long path gas chamber L1 and the short path gas chamber L2, the detection precision reaches 5%reading+50 ppm within the range of 0-40000 ppm.

The invention has the following beneficial effects:
1. Double ranges: the two light sources respectively correspond to the long path gas chamber L1 and the short path gas chamber L2, and detection results C1 and C2 obtained by the same detector at different times are used as intermediate variables to obtain a low-range concentration D1 and a high-range concentration D2. Within a low concentration range, the measurement result concentration D1 obtained by means of the long path gas chamber L1 is used as a final concentration; within a high concentration range, the measurement result obtained by means of the short path gas chamber L2 is used as final concentration; and within an intermediate concentration range, k*D1+(1-k)*D2 is used as a final concentration (where, k ranges from 0 to 1, and is a proportionality factor of dividing values of the high and low concentration ranges). In this way, the technical problem that simultaneous and high-precision measurement of a low-range concentration and a high-range concentration is unavailable in the prior art is solved.
2. Low cost: by adding a low-cost light source, the technical problem that the use of two infrared gas sensors leads to a high cost and is not beneficial for large-scale application is solved.
3. Long service life and high reliability: because the infrared gas sensor adopts two light sources which work alternately, the operating time of each light source is effectively shortened, and compared with sensors adopting a single light source and a single detector, the service life is prolonged, and the reliability is high.

The above embodiments are merely preferred ones of the invention and are not intended to limit the invention. Any modifications, equivalent substitutions and improvements made based on the spirit and principle of the invention should fall within the protection scope of the invention.

## Claims

1. A high-precision double-range infrared gas sensor, **characterized by** comprising: a chamber (10);
wherein an outer frame of the chamber (10) is configured as an enclosed structure, and a reflective portion, configured as an enclosed structure, is arranged on an inner wall of the chamber (10);
a first light source (7), a second light source (8) and an infrared detector (9) are arranged in an interior space of the chamber (10);
light emitted by the first light source (7) is reflected by the reflective portion and then captured by the infrared detector (9) to form a long path gas chamber L1 for detecting a first concentration gas;
light emitted by the second light source (8) is reflected by the reflective portion and then captured by the infrared detector (9) to form a short path gas chamber L2 for detecting a second concentration gas;
the first light source (7) and the second light source (8) are controlled by a control module which comprises a light source drive unit, a control unit and an operational amplification unit;
a detection signal of the infrared detector (9) is amplified by the operational amplification unit and then transmitted to the control unit;
the control unit generates a control signal by time-sharing control, and the control signal is transmitted to the first light source (7) and the second light source (8) by means of the light source drive unit;
a concentration of the first concentration gas is less than that of the second concentration gas.

2. The high-precision double-range infrared gas sensor according to claim 1, **characterized in that** the reflective portion configured as the enclosed structure comprises a first reflective surface (1), a second reflective surface (2), a third reflective surface (3), a fourth reflective surface (4), a fifth reflective surface (5) and a sixth reflective surface (6).

3. The high-precision double-range infrared gas sensor according to claim 2, **characterized in that** the first reflective surface (1) is arranged at an upper left corner of the chamber (10) and partially wraps around the first light source (7);
the second reflective surface (2) is arranged at an upper right corner of the chamber (10);
the third reflective surface (3) is arranged in a middle of a right side of the chamber (10);
the fourth reflective surface (4) is arranged at a lower right corner of the chamber (10);
the fifth reflective surface (5) is arranged at a bottom end of the chamber (10) and partially wraps around the second light source (8); and
the sixth reflective surface (6) is arranged at a lower left corner of the chamber (10).

4. The high-precision double-range infrared gas sensor according to claim 1, **characterized in that** the infrared detector (9) is arranged opposite to a sixth reflective surface (6).

5. The high-precision double-range infrared gas sensor according to claim 2, wherein the first reflective surface (1) is configured to converge the light emitted by the first light source (7) and reflect the converged light to the third reflective surface (3) or the fourth reflective surface (4), and the first reflective surface (1) is a parabolic reflective surface or an elliptical reflective surface.

6. The high-precision double-range infrared gas sensor according to claim 2, **characterized in that** the second reflective surface (2), the third reflective surface (3) and the fourth reflective surface (4) are arc-shaped reflective surfaces or planar reflective surfaces.

7. The high-precision double-range infrared gas sensor according to claim 2, **characterized in that** the fifth reflective surface (5) is configured to converge the light emitted by the second light source (8) and reflect the converged light to the sixth reflective surface (6).

8. The high-precision double-range infrared gas sensor according to claim 2, **characterized in that** the sixth reflective surface (6) is configured to reflect reflected light parallel to a bottom surface of the chamber (10) into the infrared detector (9), and an angle formed between the sixth reflective surface (6) and the bottom surface of the chamber (10) is 45°.

9. The high-precision double-range infrared gas sensor according to claim 2, **characterized in that** the long path gas chamber L1 comprises two light paths which are respectively a first light path and a second light path, and the short path gas chamber L2 adopts a third light path; wherein:
the first light path: the light emitted by the first light source (7) is reflected by the first reflective surface (1), the fourth reflective surface (4), the second reflective surface (2) and the sixth reflective surface (6), and then enters the infrared detector (9);
the second light path: the light emitted by the first light source (7) is reflected by the first reflective surface (1), the third reflective surface (3) and the sixth reflective surface (6), and then enters the infrared detector (9);
the third light path: the light emitted by the second light source (8) is reflected by the fifth reflective surface (5) and the sixth reflective surface (6), and then enters the infrared detector (9).

10. A high-precision double-range infrared gas analysis method, applied to the high-precision double-range infrared gas sensor according to any one of claims 1-9, **characterized by** comprising:
S1, sending, by the control unit, an initial control signal to control the first light source (7) and the second light source (8) to flicker alternately;
S2, sampling, by an operational amplification unit, a signal value C1 of the long path gas chamber L1 and a signal value C2 of the short path gas chamber L2 from the infrared detector (9);
S3, calculating a gas concentration D1 according to a linear fitting formula D1=f(C1) of calibration data of the long path gas chamber L1, and calculating a gas concentration D2 according to a linear fitting formula D2=f(C2) of calibration data of the short path gas chamber L2; and
S4, determining whether a current concentration is within a low range, a high range or an intermediate range; if the current concentration is within the low range, outputting the gas concentration D1; if the current concentration is within the high range, outputting the gas concentration D2; otherwise, outputting a calculated composite value k*D1+(1-k)*D2.
